# FASCICULE DE BREVET EUROPEEN

(11) **EP 2 776 736 B1**
(45) Date de publication et mention de la délivrance du brevet: **14.09.2016**
(21) Numéro de dépôt: 12787809.8
(22) Date de dépôt: 23.10.2012
(51) Int. Cl.: F16F 15/14

(54) **DISPOSITIF DE FILTRATION DE TYPE OSCILLATEUR PENDULAIRE COMPORTANT UN SYSTEME DE GUIDAGE PERFECTIONNE**
FILTRATIONSVORRICHTUNG VOM TYP EINES PENDELOSZILLATORS MIT VERBESSERTEM FÜHRUNGSSYSTEM
FILTRATION DEVICE OF THE PENDULAR OSCILLATOR TYPE COMPRISING AN IMPROVED GUIDANCE SYSTEM

(30) Priorité: 07.11.2011 FR 1160113
(43) Date de publication de la demande: 17.09.2014
(73) Titulaire: Valeo Embrayages, 80009 Amiens (FR)
(72) Inventeur: VERHOOG, Roel, F-60190 Gournay Sur Aronde (FR)
(74) Mandataire: Cardon, Nicolas
(86) Numéro de dépôt international: PCT/FR2012/052430
(87) Numéro de publication internationale: WO 2013/068667

(56) Documents cités:
- EP-A2- 1 270 901
- DE-A1-102009 042 836
- US-A1- 2010 122 605

## Description

La présente invention concerne un dispositif de filtration de type oscillateur pendulaire comportant un système de guidage perfectionné.

La présente invention concerne plus particulièrement un dispositif de filtration, notamment pour une transmission de véhicule automobile, ayant un axe de rotation et comportant :
- au moins un organe de support apte à être entraîné en rotation autour de l'axe de rotation,
- au moins une masselotte, adjacente audit organe de support, par rapport auquel ladite masselotte est apte à osciller dans un plan d'oscillation orthogonal à l'axe de rotation, et
- un système de guidage de la masselotte par rapport à l'organe de support intervenant entre ledit au moins un organe de support et ladite au moins une masselotte.

Le document DE 10 2009 042836 A1 représente l'état de la technique le plus proche et décrit toutes les caractéristiques du préambule de la revendication 1.

On connaît de l'état de la technique de tels dispositifs de filtration qui, encore appelés oscillateur pendulaire ou pendule, équipent notamment mais non exclusivement la transmission d'un véhicule automobile.

Dans une transmission de véhicule automobile, on associe généralement au moins un dispositif d'amortissement de torsion à un embrayage apte à relier sélectivement le moteur à la boîte de vitesses, tels qu'un embrayage à friction ou un appareil d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans les cylindres du moteur, lesdits acyclismes variant notamment en fonction du nombre de cylindres.

Les moyens amortisseurs d'un dispositif d'amortissement de torsion ont par conséquent pour fonction de filtrer les vibrations engendrées par les acyclismes et interviennent avant la transmission du couple moteur à la boîte de vitesses.

A défaut, des vibrations pénétrant dans la boîte de vitesse y provoqueraient en fonctionnement des chocs, bruits ou nuisances sonores particulièrement indésirables.

C'est l'une des raisons pour lesquelles, on utilise un ou plusieurs moyens d'amortissement aptes à filtrer les vibrations à au moins une fréquence déterminée.

Dans le domaine des transmissions, la recherche de l'obtention d'une filtration toujours plus performante a conduit pour certaines applications à adjoindre un dispositif de filtration de type oscillateur pendulaire aux dispositifs d'amortissement ou amortisseurs conventionnellement mis en oeuvre, tant dans les embrayages à friction que dans les appareils d'accouplement hydrocinétique de véhicule automobile.

Un dispositif de filtration de type oscillateur pendulaire comporte un organe de support et au moins une masse ou masselotte, généralement plusieurs, agencée autour de l'axe de rotation de l'arbre moteur et qui est libre d'osciller autour d'un axe fictif sensiblement parallèle à l'axe de rotation de l'arbre moteur.

En réaction aux irrégularités de rotation, lesdites masselottes se déplacent de manière à ce que le centre de gravité de chacune des masselottes oscille autour d'un axe sensiblement parallèle à l'axe de rotation de l'arbre moteur.

La position radiale du centre de gravité de chacune des masselottes par rapport à l'axe de rotation de l'arbre moteur ainsi que la distance de ce centre de gravité par rapport à l'axe fictif d'oscillation sont établies de manière à ce que, sous l'effet des forces centrifuges, la fréquence d'oscillation de chacune des masselottes soit proportionnelle à la vitesse de rotation de l'arbre moteur, ce multiple pouvant par exemple prendre une valeur proche du rang de l'harmonique prépondérant des vibrations responsables des fortes irrégularités de rotation.

Lors d'essais de tels dispositifs de filtration de type oscillateur pendulaire, la demanderesse a constaté des écarts surprenants entre les résultats obtenus respectivement sur banc d'essais et sur véhicule, les résultats sur véhicule étant inférieurs.

La demanderesse a su établir la cause de ces moindres performances, lesquelles sont dues au fait que les masselottes du dispositif de filtration de type oscillateur pendulaire sont particulièrement sensibles aux accélérations axiales du moteur associé à la transmission du véhicule.

En effet, les éléments du système de guidage intervenant entre la masselotte et l'organe de support, tels que des rouleaux cylindriques, coopèrent avec des pistes de guidage qui s'étendent axialement parallèlement à l'axe X de rotation.

Ainsi, les pistes de guidage sont perpendiculaires au plan d'oscillation orthogonal à l'axe de rotation du dispositif de filtration, de sorte que seuls les efforts radiaux sont susceptibles d'être repris par les moyens de roulement du système de guidage.

Par conséquent, les accélérations axiales du moteur génèrent dans les dispositifs de filtration de l'état de la technique des frottements parasites en provoquant un déplacement axial de la masselotte qui vient alors au contact de l'organe de support.

Dans un dispositif de filtration, ladite au moins une masselotte et ledit au moins un organe de support forment des pièces mobiles l'une par rapport à l'autre et qui présentent axialement entre elles, aux tolérances de fabrication près, un jeu fonctionnel donné pour l'oscillation de la masselotte.

En fonctionnement, une masselotte peut parfois venir frotter contre l'organe de support ce qui a alors pour conséquence une augmentation de la dispersion de la performance du dispositif de filtration.

Pour limiter de tels frottements, il est connu de prévoir des moyens de butée axiale par exemple des bourrelets latéraux portés par les rouleaux du système de guidage intervenant entre la masselotte et l'organe de support ou encore d'intégrer des patins de frottement entre la masselotte et l'organe de support afin, d'une manière générale, de tenter de réduire ces frottements parasites.

Ces frottements sont en effet à l'origine de l'apparition d'un couple parasite qui affecte sensiblement les performances du dispositif de filtration lesquelles ne donnent alors pas entière satisfaction.

Le but de la présente invention est donc tout particulièrement de proposer une conception permettant de résoudre les problèmes induits par les efforts axiaux provoquant des frottements parasites dans un tel dispositif de filtration, et ce faisant d'en améliorer les performances tout en conservant notamment un faible encombrement et un fonctionnement optimal du dispositif de filtration.

Dans ce but, l'invention propose un dispositif de filtration du type décrit précédemment, caractérisé en ce que le système de guidage comporte au moins deux éléments de roulement, chaque élément de roulement étant apte à coopérer avec une paire de pistes opposées, respectivement une première piste de guidage portée par ladite au moins une masselotte et une deuxième piste de guidage portée par ledit au moins un organe de support, lesdites première et deuxième pistes de guidage étant agencées pour guider radialement et axialement le mouvement d'oscillation de la masselotte par rapport à l'organe de support.

Avantageusement, les pistes de guidage avec lesquelles coopèrent chacun des deux éléments de roulement appairés du système de guidage sont obliques de manière à reprendre tant les efforts radiaux, que les efforts axiaux.

De préférence, les pistes de guidage d'un élément de roulement sont parallèles entre elles et forment chacune un angle (α) de 45° avec le plan d'oscillation, lesdites pistes étant portées respectivement par une masselotte et un organe de support.

Par comparaison avec l'état de la technique, lesdites première et deuxième pistes de guidage sont, en section par un plan perpendiculaire au plan d'oscillation, inclinées par rapport au plan d'oscillation d'un angle (α) inférieur à 90°, valeur de 90° pour laquelle les pistes de guidage s'étendent axialement orthogonalement au plan d'oscillation.

Avantageusement, en raison du faible coefficient de frottement de l'élément de roulement, tel qu'une bille, avec les pistes inclinées ou obliques, on réduit très sensiblement les frottements parasites précités et ce faisant on améliore les performances de filtration du dispositif de filtration.

Selon d'autres caractéristiques de l'invention :
- lesdites premières et deuxièmes pistes de guidage sont obliques par rapport au plan d'oscillation ;
- le dispositif comporte au moins deux systèmes de guidage, respectivement au moins un premier système de guidage et un deuxième système de guidage, qui sont interposés axialement entre ledit au moins un organe de support et ladite au moins une masselotte ;
- les moyens de liaison sont agencés circonférentiellement entre lesdits premier système de guidage et deuxième système de guidage ;
- le dispositif comporte trois systèmes de guidage et les éléments de roulement desdits systèmes de guidage sont agencés en triangle de manière à limiter le basculement de ladite au moins une masselotte par rapport audit organe de support ;
- au moins deux éléments de roulement sont reliés mutuellement en déplacement pour former un équipage mobile grâce à quoi lesdits au moins deux éléments de roulement se déplacent simultanément ;
- les moyens de liaison constituent des moyens de butée aptes à limiter les oscillations de ladite au moins une masselotte par rapport audit au moins un organe de support ;
- le dispositif comporte des moyens d'absorption des chocs qui sont associés auxdits moyens de butée formés par les moyens de liaison ;
- lesdits éléments de roulement du système de guidage sont respectivement constitués par une bille ;
- le dispositif présente une symétrie de conception par rapport à un plan radial médian de l'organe de support, orthogonal à l'axe de rotation ;
- le dispositif présente une symétrie de conception par rapport à un plan radial médian de la masselotte.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente un dispositif de filtration de type oscillateur pendulaire selon une première conception, le dispositif comportant un système de guidage selon un premier mode de réalisation de l'invention ;
- la figure 2 est une demi-vue en perspective qui représente en éclaté un dispositif de filtration analogue à celui de la figure 1 et qui illustre deux systèmes de guidage suivant le premier mode de réalisation de l'invention ;
- la figure 3 est une vue partielle de face d'un dispositif de filtration selon les figures 1 et 2, qui représente en détail, après mise en transparence d'une masselotte, les rainures du système de guidage comportant les pistes et les éléments de roulement associés lorsque le dispositif de filtration est au repos ;
- les figures 4 et 5 sont respectivement des vues qui, analogues aux figures 3 et 2, représentent le dispositif de filtration en fonctionnement et qui illustre une position particulière correspondant à la venue en butée des moyens de liaison à l'extrémité de la fente de l'organe de support ;
- la figure 6 est une vue en coupe axiale qui représente un dispositif de filtration selon la figure 1 et qui illustre les pistes de guidage obliques selon l'invention et les éléments de roulement coopérant en fonctionnement avec lesdites pistes lorsque chacune des masselottes oscille ;
- la figure 7 est une vue analogue à la figure 6 qui représente une variante de réalisation du premier mode de réalisation dans laquelle les rainures, portées par l'organe de support et respectivement associées aux systèmes de guidage de l'une et l'autre des deux masselottes, communiquent axialement l'une avec l'autre ;
- la figure 8 est une demi-vue en perspective qui représente en éclaté un dispositif de filtration selon un deuxième mode de réalisation et qui illustre des moyens qui, formant cage, relient les éléments de roulement de manière à former un équipage mobile dont les éléments de roulement se déplacent simultanément ;
- la figure 9 est une demi-vue analogue à la figure 8 qui représente une première variante de réalisation du deuxième mode réalisation du dispositif de filtration ;
- la figure 10 est une demi-vue analogue à la figure 8 qui représente une deuxième variante de réalisation du deuxième mode réalisation du dispositif de filtration ;
- la figure 11 est une vue analogue à la figure 10 qui représente le dispositif de filtration assemblé, en l'absence de l'une des masselottes pour illustrer les moyens reliant les éléments de roulement en position ;
- la figure 12 est une demi-vue en perspective qui représente en éclaté un dispositif de filtration selon un troisième mode de réalisation et qui illustre trois éléments de roulement associés par masselotte qui sont reliés ensemble de manière à former un équipage mobile dont les éléments de roulement se déplacent simultanément ;
- la figure 13 est une demi-vue analogue à la figure 12 qui représente une variante de réalisation selon laquelle les systèmes de guidage associés à chacune des deux masselottes du dispositif de filtration sont, ainsi que leurs éléments de roulement, reliés axialement entre eux pour se déplacer simultanément ;
- la figure 14 est une vue partielle de face d'un dispositif de filtration selon la figure 13 qui représente en détail, avec une masselotte en transparence, les systèmes de guidage selon le troisième mode de réalisation et le profil du bord externe de l'organe de support ;
- la figure 15 est une vue en coupe axiale selon le plan de coupe XV-XV représenté à la figure 14 et passant par le troisième élément de roulement ;
- la figure 16 est une demi-vue en éclaté qui représente un dispositif de filtration selon un quatrième mode de réalisation et qui illustre un agencement des moyens de liaison des masselottes circonférentiellement entre deux systèmes de guidage identiques à ceux du premier mode de réalisation illustré à la figure 2 ;
- la figure 17 est une vue partielle de face d'un dispositif de filtration selon la figure 16 qui représente en détail, avec une masselotte en transparence, l'agencement des moyens de liaison entre les deux systèmes de guidage ;
- la figure 18 est une demi-vue en perspective qui représente un dispositif de filtration assemblé selon un cinquième mode de réalisation et qui illustre un agencement selon lequel les moyens de liaison formant moyens de butée sont disposés radialement à l'extérieur des systèmes de guidage ;
- la figure 19 est une demi-vue en perspective qui représente en éclaté un dispositif de filtration selon la figure 18 ;
- la figure 20 est une vue partielle de face d'un dispositif de filtration selon la figure 18 qui représente en détail, avec une masselotte en transparence, l'agencement respectif des moyens de liaison et des deux systèmes de guidage ;
- la figure 21 est une vue en perspective qui représente en éclaté un dispositif de filtration selon une deuxième conception et qui illustre un mode de réalisation similaire à celui des figures 1 à 6 ;
- la figure 22 est une demi-vue de face d'un dispositif de filtration selon la figure 21 ;
- la figure 23 est une vue en coupe axiale d'un dispositif de filtration selon les figures 21 et 22.

Dans la suite de la description et les revendications, on utilisera à titre non limitatif et afin d'en faciliter la compréhension, les "externe" et "interne" ainsi que les orientations "axial" et "radial" pour désigner, selon les définitions données dans la description, des éléments du dispositif de filtration.

Par convention, l'orientation "radiale" est dirigée orthogonalement à l'axe (X) de rotation du dispositif de filtration déterminant l'orientation "axiale" et de l'intérieur vers l'extérieur en s'éloignant dudit axe, l'orientation "circonférentielle" est dirigée orthogonalement à l'axe du dispositif de filtration et orthogonalement à la direction radiale.

Les termes "externe" et "interne" sont utilisés pour définir la position relative d'un élément par rapport à un autre, par référence à l'axe de rotation du dispositif de filtration, un élément proche de l'axe est ainsi qualifié d'interne par opposition à un élément externe situé radialement en périphérie.

Pour la suite de la description, des éléments présentant des fonctions similaires, identiques ou analogues seront désignés par des mêmes numéros de référence.

L'invention concerne un dispositif de filtration qui, ayant un axe X de rotation, est notamment apte à équiper une transmission de véhicule automobile, ledit dispositif de filtration comportant en particulier au moins un organe de support et au moins une masselotte pour former un oscillateur pendulaire.

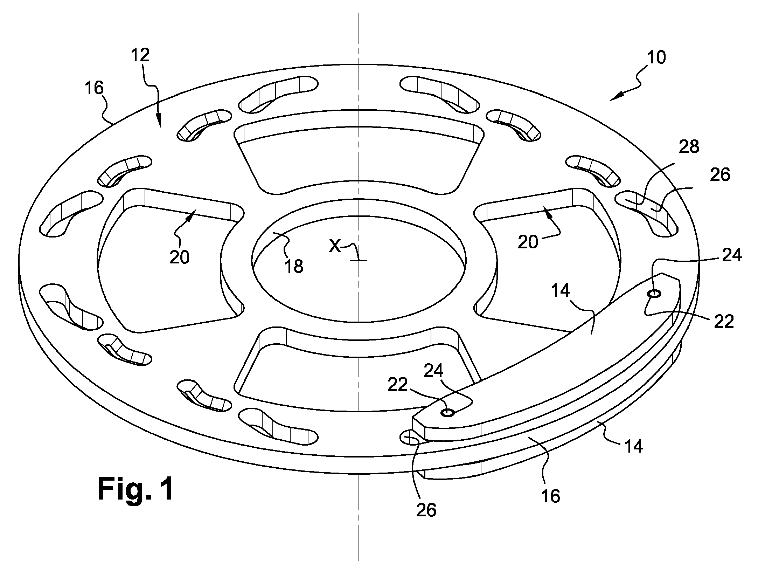

On a représenté à la figure 1, un dispositif 10 de filtration de type oscillateur pendulaire réalisé selon une première conception dans laquelle ledit dispositif 10 comporte un organe 12 de support et au moins une masselotte 14 en deux parties.

Dans cette première conception représentée notamment à la figure 1, ladite au moins une masselotte 14 est réalisée en deux parties, les deux parties de la masselotte 14 étant formées par une paire d'éléments de masse qui sont respectivement agencés axialement de part et d'autre dudit organe 12 de support.

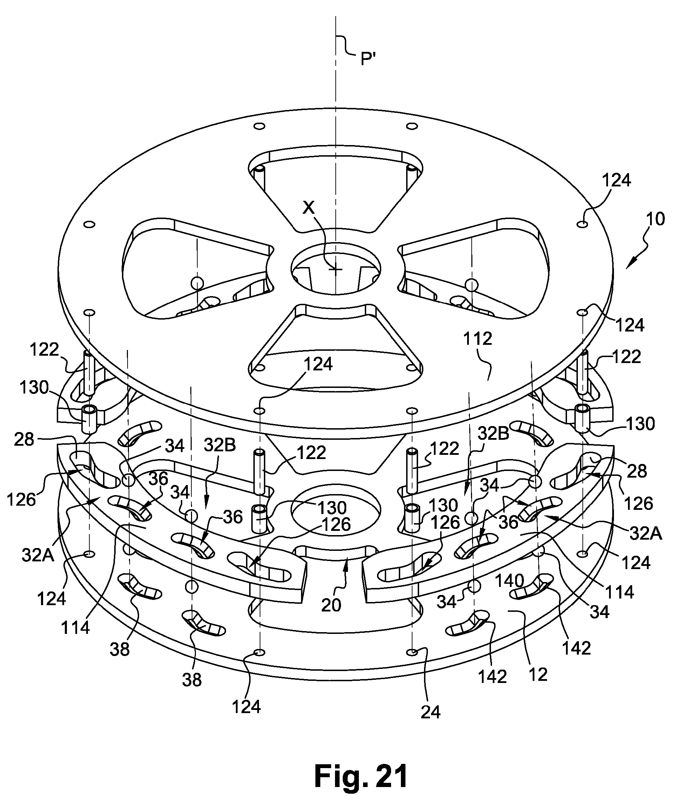

En variante et selon une deuxième conception qui sera décrite ultérieurement en référence aux figures 21 à 23, ladite au moins une masselotte 14 est réalisée en une seule partie ou élément de masse.

Dans la suite de la description, le terme "masselotte" est utilisé de manière générique, indépendamment de la conception du dispositif 10 de filtration, que la masselotte soit réalisée en une ou en deux parties.

En généralisant, le dispositif 10 de filtration comporte un premier élément agencé axialement entre deux seconds éléments.

Ainsi, pour la première conception, le premier élément du dispositif 10 de filtration est constitué par l'organe 12 de support qui est interposé axialement entre les deux parties de la masselotte 14 lesquelles constituent lesdits deux seconds éléments du dispositif 10 de filtration.

L'organe 12 de support est apte à être entraîné en rotation autour de l'axe X de rotation du dispositif 10 de filtration.

Avantageusement, le dispositif 10 de filtration comporte au moins deux masselottes 14 qui sont chacune réalisées en deux parties.

En effet, le dispositif 10 de filtration comporte avantageusement des masselottes 14 sur l'ensemble du pourtour de l'organe 12 de support et dont le nombre comme l'agencement sont déterminés de manière que le centre de gravité de l'ensemble des masselottes 14 du dispositif 10 de filtration soit sur l'axe X de rotation du dispositif 10 de filtration.

Dans le cas d'une application à une transmission de véhicule automobile, on rappellera que l'axe X de rotation du dispositif 10 de filtration est avantageusement coaxial à un arbre tel que l'arbre moteur ou à l'arbre de la boîte de vitesses selon la disposition en entrée ou en sortie dudit dispositif 10 de filtration dans la chaîne de la transmission.

De préférence, le dispositif 10 de filtration de type oscillateur pendulaire est destiné à être intégré à un amortisseur de torsion (non représenté).

De manière connue, un tel amortisseur de torsion comporte au moins un élément d'entrée, au moins un élément de sortie et des organes élastiques à action circonférentielle qui sont interposés entre lesdits éléments d'entrée et de sortie.

Dans le cas précité d'une application à une transmission de véhicule automobile, l'élément d'entrée est destiné à être entraîné en rotation par un arbre menant (non représenté), tel que le vilebrequin du moteur à combustion interne du véhicule automobile équipé de la transmission, tandis l'élément de sortie est lié en rotation à un arbre mené (non représenté), tel que l'arbre d'entrée de la boîte de vitesses du véhicule qui est relié aux moyens de changement de rapport de vitesses.

De préférence,, l'organe 12 de support du dispositif de filtration 10 de type oscillateur pendulaire est constitué par l'élément de sortie dudit amortisseur de torsion ou un élément lié en rotation à l'élément de sortie.

Le dispositif 10 de filtration de type oscillateur pendulaire est donc porté par l'élément ou l'un des éléments de sortie d'un tel amortisseur et est agencé à la périphérie radiale externe dudit élément de sortie qui, est une rondelle formant ledit organe 12 de support du dispositif 10 de filtration.

En variante, l'organe 12 de support du dispositif de filtration 10 de type oscillateur pendulaire est constitué par l'élément d'entrée dudit amortisseur de torsion, un élément lié en rotation à l'élément d'entrée ou un élément disposés entre deux groupes d'organes élastiques disposés en série lorsque le dispositif de filtration comporte plusieurs groupes d'organes élastiques en série.

L'organe 12 de support comporte un bord 16 externe et un bord 18 interne entre lesquels sont découpées des fenêtres 20 (ici au nombre de quatre).

Les fenêtres 20 sont destinées à recevoir lesdits organes élastiques à action circonférentielle de l'amortisseur de torsion qui sont interposés entre lesdits éléments d'entrée et de sortie et forment des logements dans lesquels lesdits organes élastiques sont maintenus en position.

Le dispositif 10 de filtration de type oscillateur pendulaire est agencé à la périphérie radiale externe de l'organe 12 de support, radialement entre les fenêtres 20 et le bord externe 16, de manière à être soumis à une force centrifuge maximale lors de l'entraînement en rotation du dispositif.

Les masselottes 14 sont agencées circonférentiellement autour de la rangée circulaire d'organes élastiques (non représentés) destinés à être reçus dans les fenêtres 20.

Une masselotte 14 présente une forme de plaquette qui est incurvée en arc de cercle de manière à suivre globalement le contour déterminé par le bord externe 16 de l'organe 12 de support.

De préférence, le dispositif 10 de filtration comporte un nombre n de masselottes 14 qui sont avantageusement réparties circonférentiellement de manière régulière le long du bord externe 16.

Dans le premier mode de réalisation représenté à la figure 1, le nombre n est égal à 4. Bien entendu, le nombre n est susceptible de varier en fonction des applications, n étant de préférence un nombre pair par exemple 2, 4 ou 6.

En variante, n est un nombre impair par exemple 3 ou 5.

Sur la figure 1, on a représenté pour simplifier seulement l'une des quatre masselottes 14 que comporte le dispositif 10 de filtration, les autres masselottes 14 non représentées étant identiques, la description qui va être faite vaut donc de la même manière pour ces dernières.

Les deux parties de la masselotte 14 sont adjacentes audit organe 12 de support, chaque masselotte 14 étant apte à osciller dans un plan d'oscillation orthogonal à l'axe X de rotation par rapport à l'organe 12 de support.

Les deux parties de la masselotte 14 sont reliées axialement entre elles par des moyens 22 de liaison, au travers de l'organe 12 de support et se comportent en fonctionnement comme une unique masselotte bien que réalisée en deux parties.

Les moyens 22 de liaison déterminent un jeu axial maximal entre chacune des parties de la masselotte 14 et l'organe 12 de support interposé axialement entre elles.

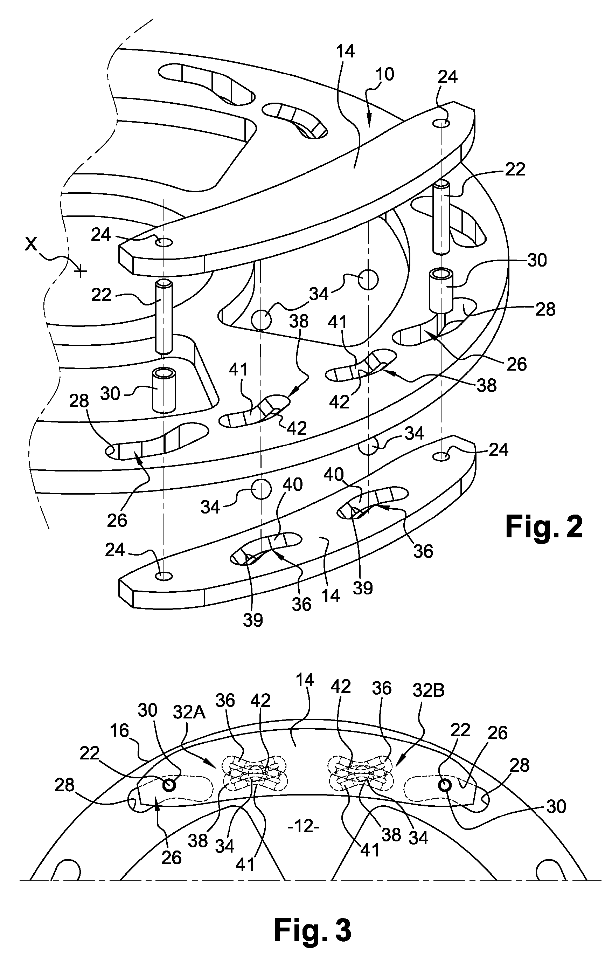

De préférence et tel qu'illustré à la figure 2, les moyens 22 de liaison sont constitués par des entretoises.

Les deux parties de la masselotte 14 sont reliées l'une à l'autre en deux points de fixation. Pour ce faire, chaque partie de masselotte 14 comporte deux trous 24, lesquels sont dans ce premier mode de réalisation respectivement agencés l'un et l'autre à chacune des extrémités circonférentielles de la partie de la masselotte 14.

Chaque trou 24 est débouchant et s'étend donc axialement à travers l'épaisseur de la masselotte 14, ici de chacune des deux parties de la masselotte 14.

Un trou 24 est destiné à recevoir l'extrémité axiale d'une des entretoises 22.

Ainsi, une extrémité libre d'une entretoise 22 est-elle reçue dans l'un des trous 24 d'une partie de la masselotte 14 tandis que l'autre extrémité libre de cette entretoise 22 est reçue dans l'un des trous 24 que comporte l'autre partie de la masselotte 14 disposée axialement en vis-à-vis, de l'autre côté de l'organe 12 de support.

La fixation d'une entretoise 22 et des deux parties de la masselotte 14 est par exemple obtenue par déformation desdites extrémités libres reçues dans les trous 24, notamment à la manière d'un rivet.

En variante, la fixation est obtenue par tout moyen approprié, par exemple par emmanchement à force ou par soudage.

Chaque entretoise 22 comporte entre lesdites extrémités axiales un tronçon central qui s'étend axialement à travers l'organe 12 de support dans lequel une fente 26 est ménagée à cet effet.

Pour relier entre elles chaque partie d'une masselotte 14, le dispositif 10 comporte deux entretoises 22, de sorte que l'organe 12 de support comporte deux fentes 26 associées, chaque fente 26 s'étendant circonférentiellement et ayant ici globalement une forme incurvée avec un concavité orientée vers l'axe X de rotation.

Avantageusement, chaque fente 26 est conformée pour laisser la masselotte 14 libre, dans la limite d'un certain débattement, d'osciller dans un plan d'oscillation radial, orthogonal à l'axe X de rotation.

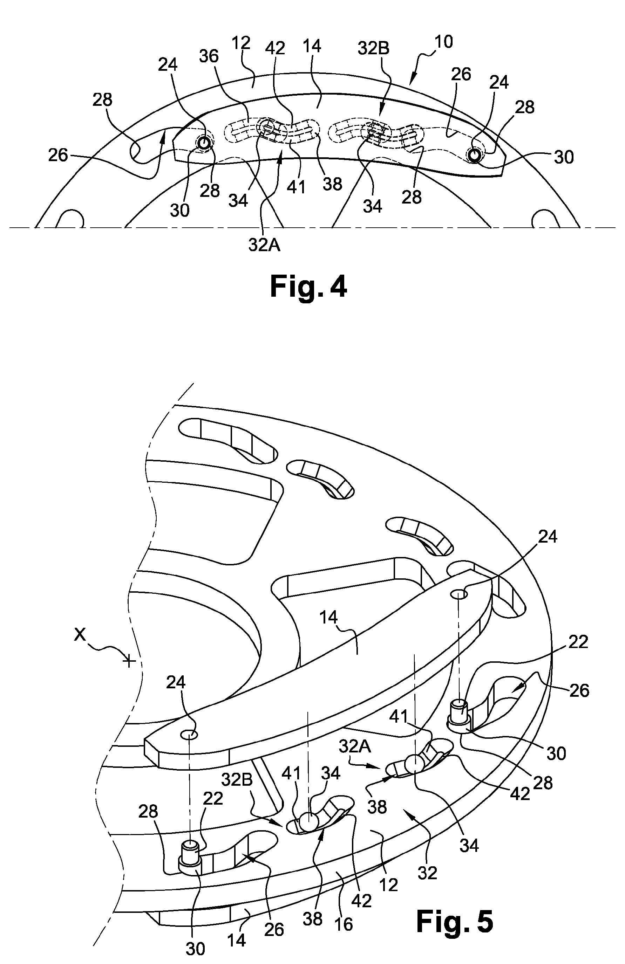

De préférence et tel qu'illustré aux figures 4 et 5, chaque fente 26 est conformée de manière que le tronçon central de chaque entretoise 22 soit susceptible, dans certaines conditions de fonctionnement, de venir en butée contre l'une des faces 28 de butée située à chaque extrémité de la fente 26 associée.

Avantageusement, les moyens 22 de liaison constituent donc des moyens de butée aptes à limiter sélectivement le déplacement de la masselotte 14 par rapport à l'organe 12 de support.

Avantageusement, le dispositif 10 de filtration comporte des moyens 30 d'absorption qui sont associés aux moyens de butée et notamment aptes à absorber les chocs pour réduire tout ou partie des bruits provoqués par le contact métal/métal survenant, en l'absence de tels moyens, entre le tronçon central d'une entretoise 22 et la face 28 de butée d'une fente 26.

Avantageusement, les moyens 30 d'absorption sont constitués par des moyens déformables élastiquement.

De préférence, les moyens 30 d'absorption sont portés par les moyens 22 de liaison. En variante, les moyens 30 d'absorption sont portés par l'organe 12 de support et sont agencés dans chaque fente 26 au niveau de la face 28 de butée.

Avantageusement, les moyens 30 d'absorption sont formés par un manchon qui est monté autour du tronçon central de chaque entretoise 22 de manière à s'interposer entre le tronçon central de l'entretoise 22 et une des faces 28 de butée lors de la venue en butée de la première contre la seconde tel que cela est représenté sur les figures 4 et 5.

Les moyens 30 d'absorption sont réalisés dans un matériau déformable élastiquement, tels qu'un manchon rapporté ou une couche déposée respectivement en matériau élastomère.

Le dispositif 10 de filtration comporte au moins un système 32 de guidage de la masselotte 14 par rapport à l'organe 12 de support intervenant entre ledit au moins un organe 12 de support et ladite au moins une masselotte 14.

Le système 32 de guidage comporte au moins deux éléments 34 de roulement appairés. L'un des deux éléments 34 de roulement est interposé axialement entre une partie de la masselotte 14 et l'organe 12 de support tandis que l'autre des deux éléments 34 de roulement est interposé entre l'organe 12 de support et l'autre partie de la masselotte 14.

Dans la première conception du dispositif 10 de filtration, les deux éléments 34 de roulement sont ainsi agencés axialement de part et d'autre de l'organe 12 de support, en opposition l'un par rapport à l'autre.

Selon la généralisation décrite précédemment, les deux éléments 34 de roulement appairés sont séparés l'un de l'autre par ledit premier élément constitué par l'organe 12 de support dans le cas de la première conception et par une masselotte 14 en une seule partie dans le cas de la deuxième conception qui sera décrite ultérieurement en relation avec les figures 21 à 23.

Dans le système 32 de guidage, chacun des deux éléments 34 de roulement est apte à coopérer avec une paire de pistes opposées, respectivement une première piste 40 de guidage portée par ladite au moins une masselotte 14 et une deuxième piste 42 de guidage portée par ledit au moins un organe 12 de support.

Selon l'invention, lesdites première et deuxième pistes de guidage sont agencées pour guider radialement et axialement le mouvement d'oscillation de la masselotte 14 associée par rapport à l'organe 12 de support.

Avantageusement, lesdites premières et deuxièmes pistes 40 et 42 de guidage sont obliques par rapport au plan d'oscillation.

Ainsi, lesdites première et deuxième pistes 40 et 42 de guidage de chacun des deux éléments 34 de roulement du système 32 de guidage sont, en section par un plan perpendiculaire au plan d'oscillation, inclinées par rapport audit plan d'oscillation.

De préférence, le système 32 de guidage comporte pour chaque élément 34 de roulement une paire de rainures associées et opposées comportant une rainure 36 portée par l'une des parties de la masselotte 14 et une rainure 38 portée par ledit organe 12 de support, lesdites première et deuxième pistes 40 et 42 de guidage de l'élément 34 de roulement en fonctionnement appartenant respectivement à chacune desdites rainures 36, 38.

Chacune des deux rainures 36, 38 associées présente un profil incurvé qui est délimité par deux faces latérales et opposées, l'une formant la piste pour l'élément 34 de roulement, l'autre formant avantageusement une face de butée contre laquelle l'élément 34 de roulement est en appui lorsque le dispositif 10 de filtration est au repos.

Ainsi, la rainure 36 de guidage portée par la masselotte 14 présente un profil incurvé qui est respectivement délimité par une première face 39 supérieure formant butée et une deuxième face inférieure formant la première piste 40 de guidage.

De la même manière, la rainure 38 de guidage portée par l'organe 12 de support présente un profil incurvé qui est respectivement délimité par une première face 41 inférieure formant butée et une deuxième face supérieure formant la deuxième piste 42 de guidage.

Le système 32 de guidage comporte deux éléments 34 de roulement appairés, chacun des éléments 34 de roulement étant aptes à coopérer avec une paire de pistes opposées.

Chaque élément 34 de roulement coopère respectivement avec une première piste 40 de guidage que comporte la rainure 36 portée par l'une des deux parties de la masselotte 14 et une deuxième piste 42 de guidage que comporte la rainure 38 portée par ledit organe 12 de support, lequel organe 12 de support est interposé axialement entre les deux parties de la masselotte 14 dans le cas de la première conception.

Avantageusement, lesdites première et deuxième pistes 40, 42 sont inclinées de manière à former, en section par un plan perpendiculaire au plan d'oscillation, un angle aigu par rapport au plan d'oscillation, c'est-à-dire un angle inférieur à 90°, valeur d'angle droit correspondant aux solutions de l'état de la technique dans lesquelles les efforts radiaux seuls sont repris.

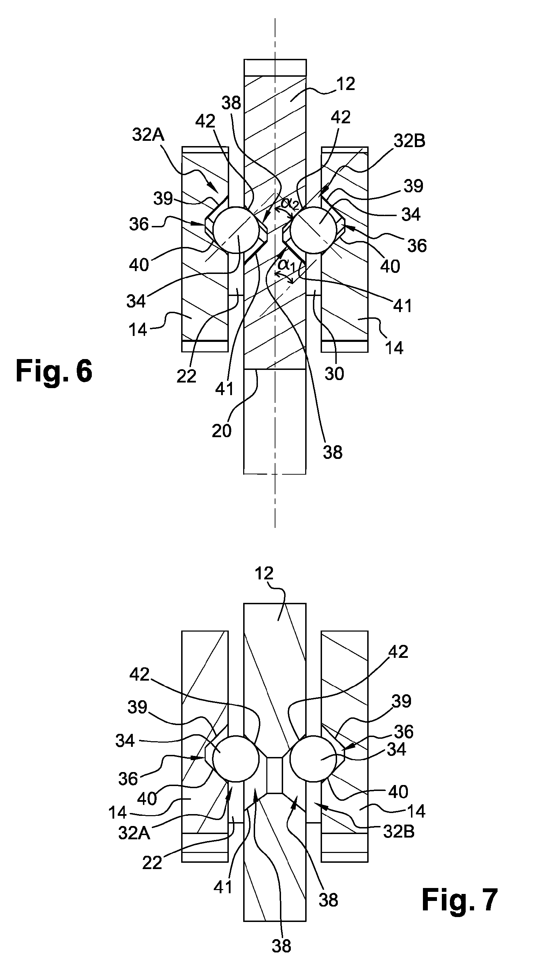

Tel que représenté sur la section de la figure 6, le plan passant par la première piste 40 intersecte le plan P radial médian de la masselotte 14 en formant un angle aigu (α₁) et le plan passant par la deuxième piste 42 de guidage intersecte le plan P radial médian de la masselotte 14 en formant un angle aigu (α₂).

Grâce à une telle conformation des pistes du système 32 de guidage, chacun des éléments 34 de roulement est apte à reprendre tant les efforts radiaux que les efforts axiaux sollicitant le dispositif 10 de filtration en fonctionnement.

Avantageusement, les pistes 40, 42 sont parallèles et l'angle aigu (α₁) est égal à l'angle aigu (α₂), lesdits angles aigus ayant de préférence ici une valeur de 45°.

De préférence, la face 39 de butée et la première piste 40 de guidage de la rainure 36 sont en section par un plan perpendiculaire au plan d'oscillation d'orientation radiale, inclinées de manière à présenter une forme en "V".

De même, la face 41 de butée et la deuxième piste 42 de guidage de la rainure 38 sont en section par un plan perpendiculaire au plan d'oscillation d'orientation radiale, inclinées de manière à présenter une forme en "V".

Toutefois, les faces 39 et 41 de butée pourraient présenter une forme différente et sont indépendantes de la réalisation des première et deuxième pistes 40, 42 de guidage réalisées selon l'invention pour être obliques, c'est-à-dire inclinées d'un angle aigu déterminé, lequel angle aigu qui n'est donc pas un angle droit grâce à quoi le système 32 de guidage est apte à reprendre les efforts radiaux et axiaux.

En variante non représentée, les faces 39 et 41 de butée sont supprimées et la butée radiale de chaque masselotte 14, en une ou deux parties, qui détermine leur position au repos est assurée par d'autre moyens, tels que par exemple les entretoises 22 coopérant à cet effet avec une portion de la fente 26.

De préférence, la rainure 36 est réalisée par enlèvement de matière dans ladite au moins une masselotte 14 et/ou la rainure 38 est réalisée par enlèvement de matière dans ledit au moins un organe 12 de support.

Les rainures 36 et/ou 38 sont par exemple obtenue(s) par usinage de la masselotte 14 et/ou de l'organe 12 de support, en particulier pour obtenir la première piste 40 de guidage et/ou la deuxième piste 42 de guidage.

Selon la variante de réalisation représentée à la figure 7, les deux rainures 38, portées par l'organe 12 de support et associées à chacun des deux éléments 34 de roulement appairés agencés en opposition, sont débouchantes axialement et communiquent ainsi l'une avec l'autre par leur fond.

En variante non représentée, la première piste 40 de guidage appartient à une pièce rapportée à fixation sur ladite au moins une masselotte 14 et/ou la deuxième piste 42 de guidage appartient à une pièce rapportée à fixation sur ledit au moins un organe 12 de support.

Dans un système 32 de guidage, les pistes 40, 42 de guidage associées à un élément 34 de roulement sont complémentaires.

La rainure 38 comportant la deuxième piste 42 de guidage portée par l'organe 12 de support comporte un profil incurvé dont la concavité est tournée vers l'axe X de rotation tandis que la rainure 36 comportant la première piste 40 de guidage portée par ladite au moins une masselotte 14 comporte un profil de guidage incurvé en sens opposé, c'est-à-dire dont la convexité est tournée vers l'axe X de rotation.

Avantageusement, le profil incurvé de chacune des deux rainures 36, 38 associées à un élément 34 de roulement comporte un tronçon central.

Tel que représenté sur la figure 2, le tronçon central de l'une 36 des rainures est, à l'état de repos du dispositif 10, aligné selon la direction radiale avec le tronçon central de l'autre 38 des rainures afin de réaliser un autocentrage entre la masselotte 14 et l'organe 12 de support.

Avantageusement, lesdits au moins deux éléments 34 de roulement du système 32 de guidage sont respectivement constitués par une bille.

Bien entendu, une bille 34 ne constitue qu'un exemple de réalisation préféré mais n'est cependant pas limitatif dès lors que d'autres éléments de roulement sont susceptibles de convenir.

En variante non représentée, l'élément 34 de roulement du système 32 de guidage est par exemple un rouleau cylindrique.

Grâce aux pistes 40, 42 de guidage obliques qui coopèrent avec chaque élément 34 de roulement, on obtient un contact oblique propre à assurer en fonctionnement une reprise des efforts tant radiaux, qu'axiaux.

Avantageusement, le dispositif 10 de filtration comporte deux systèmes 32 de guidage, respectivement un premier système 32A de guidage et un deuxième système 32B de guidage qui, identiques, sont interposés entre la masselotte 14 et l'organe 12 de support.

Le dispositif 10 de filtration est donc avantageusement un oscillateur pendulaire de type bifilaire.

Dans le premier mode de réalisation, le dispositif 10 de filtration selon la première conception comporte une masselotte 14 en deux parties et un organe 12 de support, de sorte que le dispositif 10 comporte deux systèmes 32A et 32B de guidage pour chacune des deux parties masselotte 14, soit au total quatre systèmes 32 de guidage pour ladite masselotte 14.

Avantageusement, le dispositif 10 de filtration présente une symétrie de conception par rapport à un plan P radial médian de l'organe 12 de support qui, orthogonal à l'axe X de rotation, est représenté sur la figure 6.

Bien entendu, cela vaut pour chacune des quatre (n=4) de masselottes 14 en deux parties que comporte le dispositif 10 de filtration selon le premier mode de réalisation.

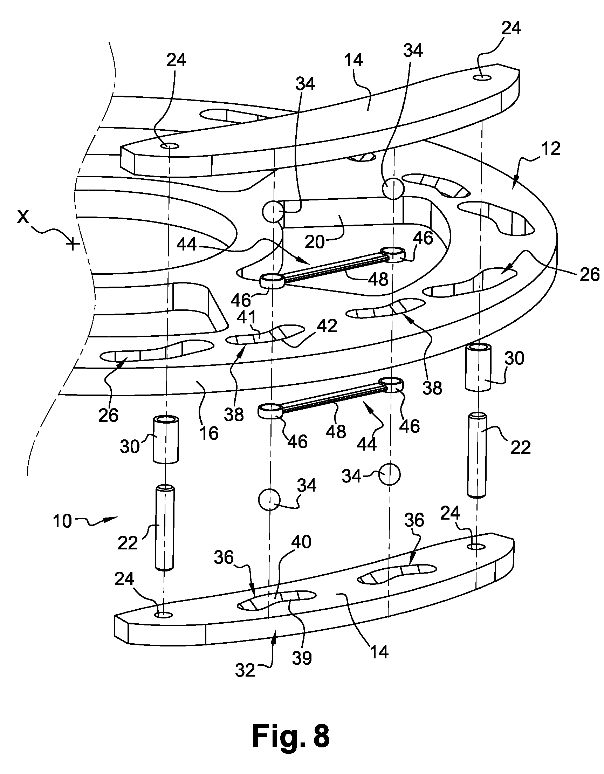

On a représenté à la figure 8, un deuxième mode de réalisation qui sera décrit ci-après par comparaison avec le premier mode de réalisation représenté aux figures 1 à 6.

Dans le deuxième mode de réalisation, les deux éléments 34 de roulement des systèmes 32A et 32B de guidage associés à l'une des deux parties de masselotte 14 sont reliés mutuellement en déplacement pour former un équipage mobile, grâce à quoi lesdits au moins deux éléments 34 de roulement se déplacent simultanément.

Par symétrie, il en est de même pour chacune des deux parties de la masselotte 14 de sorte que la description fait pour l'une vaut pour l'autre des parties de la masselotte 14.

Tel que représenté à la figure 8, le dispositif 10 comporte un moyen 44 formant une cage pour les billes 34 des systèmes 32A et 32B de guidage.

Dans l'exemple, le moyen 44 comporte deux cages 46 circulaires délimitant circonférentiellement un logement interne dans lequel est reçue une bille 34, les cages 46 étant reliées entre elles par une tige 48.

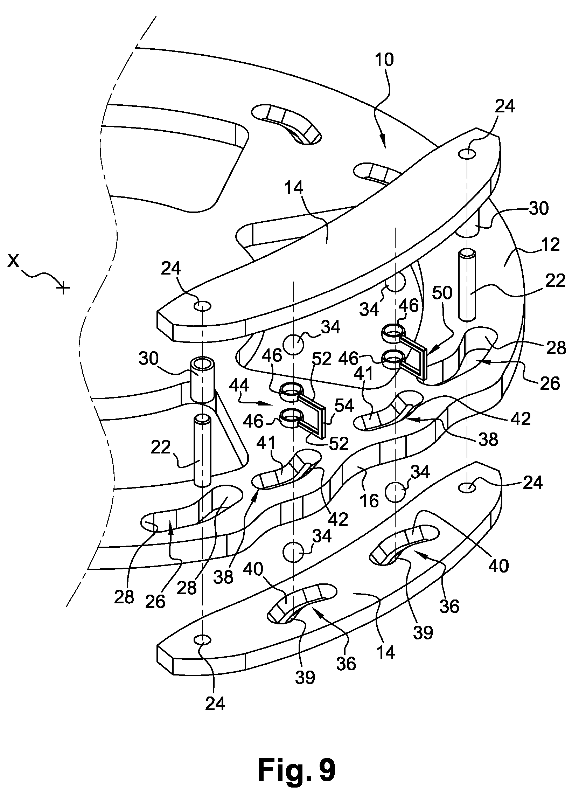

La figure 9 représente une première variante de réalisation du deuxième mode de réalisation de la figure 8 qui vient d'être décrit.

Selon cette première variante, les moyens 44 formant cage relient les deux éléments 34 de roulement appairés des deux systèmes 32 de guidage agencés axialement de part et d'autre de l'organe 12 de support et associés à chacune des deux parties de masselotte 14 et non plus aux éléments 34 de roulement des systèmes 32A et 32B de chacune des deux parties de la masselotte 14.

Ainsi, des premiers moyens 44 relient ensemble, pour former un équipage mobile, les éléments 34 de roulement des systèmes 32A de guidage de l'une et l'autre des deux parties de la masselotte 14 tandis que de seconds moyens 44 analogues aux premiers relient ensemble les éléments 34 de roulement des systèmes 32B de guidage de l'une et l'autre des deux parties de la masselotte 14.

Les moyens 44 relient entre elles les billes 34 de chaque système 32 de guidage agencés axialement de part et d'autre de l'organe 12 de support, tant des deux systèmes 32A de guidage que des deux systèmes 32B de guidage. Les premiers moyens 44 associés aux systèmes 32A de guidage ne sont cependant pas liés aux seconds moyens 44 associés aux systèmes 32B de guidage.

Les moyens 44 comportent deux cages 46 analogues qui sont reliées entre elles par une agrafe 50 comportant deux barres 52 d'orientation radiale s'étendant chacune d'un côté de l'organe 12 de support et reliées entre elles, à leur extrémité libre opposée à la cage 46, par une barre 54 d'orientation axiale et s'étendant radialement au-delà du bord externe 16 de l'organe 12 de support.

Le bord 16 externe de l'organe 12 de support présente alors un profil adapté, non circulaire, de manière à éviter que les oscillations de la masselotte 14 ne soient entravées ou affectées en fonctionnement par un contact entre la barre 54 de l'agrafe 50 et ledit bord 16.

En variante, la fonction de butée radiale déterminant la position de la masselotte 14 au repos est assurée par coopération de la barre 54 de l'agrafe 50 avec le bord 16 externe de l'organe 12 de support.

Selon cette variante, la présence d'une face 39 et 41 de butée dans les rainures 36 et 38 n'est dès lors plus nécessaire et les rainures 36 et 38 comportent fonctionnellement uniquement les première et deuxième piste 40, 42 de roulement pour chaque élément 34 de roulement d'un système 32 de guidage.

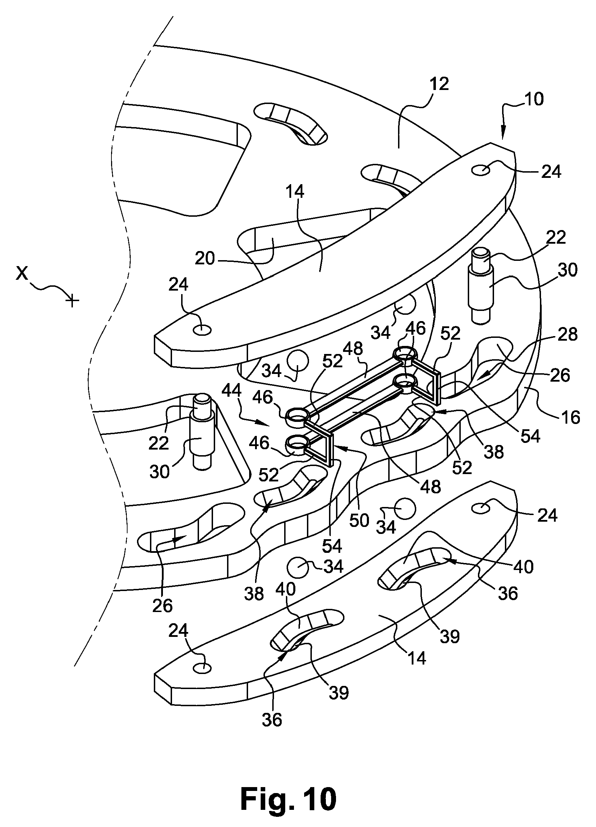

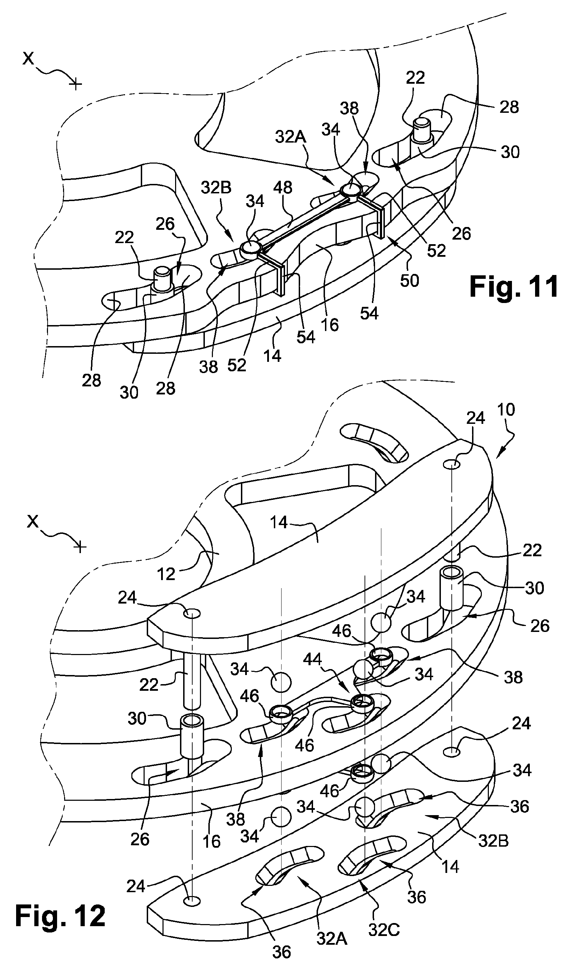

Les figures 10 et 11 représentent une deuxième variante de réalisation du deuxième mode de réalisation de la figure 8 selon lequel le dispositif 10 de filtration comporte des moyens 44 grâce auxquels les deux éléments 34 de roulement des systèmes 32A et 32B de guidage associés à l'une et/ou l'autre des deux parties de la masselotte 14 sont reliés mutuellement en déplacement pour former un équipage mobile, grâce à quoi lesdits au moins deux éléments 34 de roulement se déplacent simultanément.

Selon cette deuxième variante, les moyens 44 comportent des agrafes 50 analogues à celles décrites précédemment pour la première variante de réalisation illustrée à la figure 9, lesdites agrafes 50 étant ici également reliées entre elles par des tiges 48 comme l'étaient les cages 46 du deuxième mode de réalisation représenté à la figure 8.

Ainsi, dans cette deuxième variante, les quatre billes 34 des systèmes 32 de guidage du dispositif 10 de filtration forment ensemble un équipage mobile par l'intermédiaire des moyens 44 et sont par conséquent déplacées simultanément en fonctionnement.

La figure 12 représente un troisième mode de réalisation dans lequel le dispositif 10 de filtration comporte trois systèmes 32 de guidage et sera décrit ci-après par comparaison avec les premier et deuxième modes.

Les trois systèmes 32 de guidage sont respectivement référencés 32A, 32B et 32C et sont agencés les uns par rapport aux autres de manière à former un triangle.

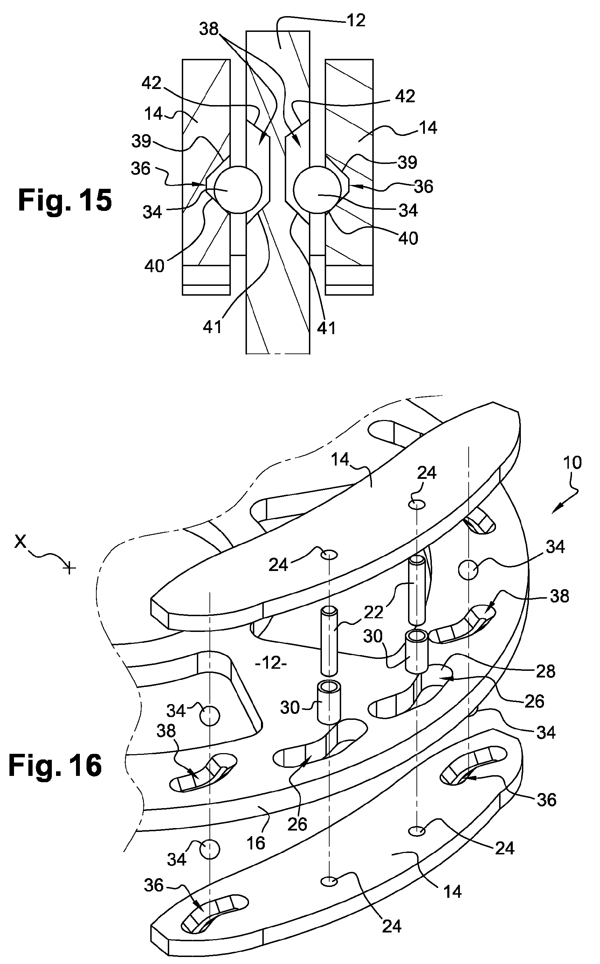

Avantageusement, l'un 32C des systèmes de guidage est un système de guidage anti-basculement conformé pour limiter le basculement de la masselotte 14 par rapport audit organe 12 de support et non pour assurer le guidage (voir figure 15).

Les systèmes de guidage étant agencés en triangle, la bille 34 du système de guidage anti-basculement 32C n'est pas alignée avec les billes 34 des autres 32A, 32B systèmes de guidage et forme une butée apte à limiter le basculement axial de la masselotte 14 par rapport à un plan d'oscillation radial, c'est à dire également par rapport à l'organe 12 de support.

Avantageusement, les trois éléments 34 de roulement sont reliés mutuellement en déplacement par un moyen 44 pour former un équipage mobile grâce à quoi lesdits éléments 34 de roulement se déplacent simultanément.

En variante non représentée, le dispositif 10 de filtration comporte trois systèmes de guidage 32A, 32B et 32C indépendants, en l'absence de tels moyens 44 comme pour le premier mode de réalisation.

De préférence, le moyen 44 comporte une embase 56 triangulaire à l'extrémité de chacune des branches de laquelle est disposée une cage 46 destinée à recevoir une bille 34, lesdites cages 46 étant ici analogues à celles décrites précédemment en référence aux figures 8 à 11.

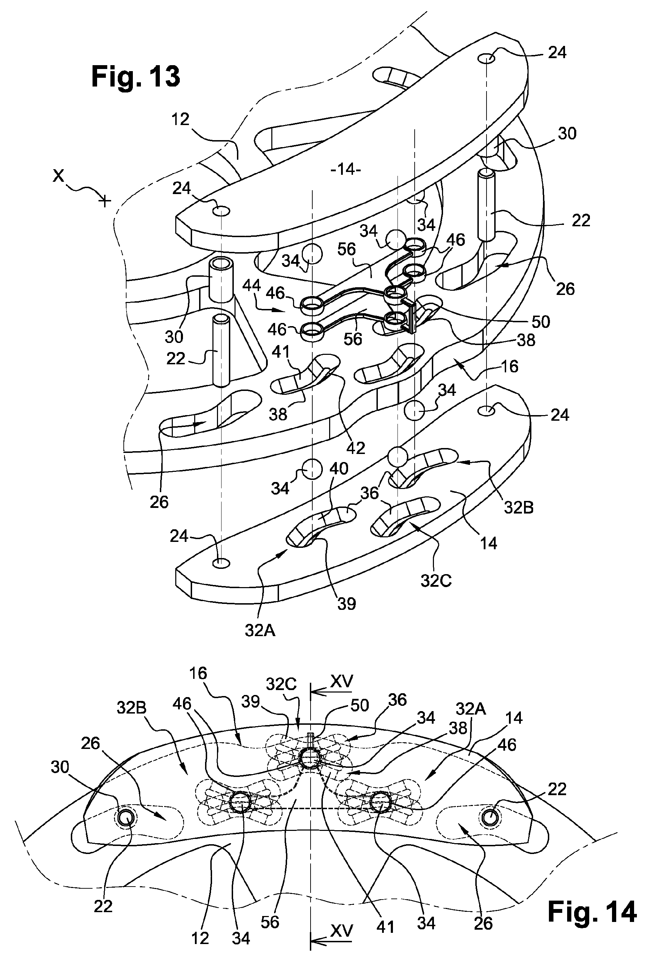

Les figures 13 à 15 représentent une variante de réalisation du troisième mode de réalisation représenté à la figure 12.

Par comparaison, la variante de réalisation se distingue du troisième mode de réalisation en ce que les moyens 44 reliant les billes 34 des trois systèmes de guidage 32A, 32B et 32C associés à l'une des deux parties de la masselotte 14 sont liés par une agrafe 50 aux autres moyens 44 analogues reliant les billes 34 des trois systèmes de guidage 32A, 32B et 32C associés à l'autre des deux parties de la masselotte 14 agencée, axialement en vis-à-vis, de l'autre côté de l'organe 12 de support.

Grâce à une telle agrafe 50, l'ensemble des éléments 34 de roulement, ici les six billes, se déplacent simultanément pour chacun des systèmes 32 de guidage associés à une masselotte 14 en deux parties et pour chacune des masselottes 14 du dispositif 10 de filtration.

Comme cela a été décrit précédemment en référence aux figures 9 et 10, puis 11, une agrafe 50 s'étend axialement au voisinage du bord externe 16 de l'organe 12 de support qui présente alors une forme sinueuse de manière que ladite agrafe 50 n'interfère pas avec le bon fonctionnement des masselottes 14, laissant en particulier ces dernières libres d'osciller.

Avantageusement, le bord externe 16 présente un profil déterminant en coopération avec chaque agrafe 50 la position au repos de la masselotte 14 en deux parties.

La figure 15 est une vue en coupe de la bille 34 du troisième système 32C de guidage anti-basculement qui permet de montrer que, contrairement aux deux autres billes 34 des systèmes 32 de guidage, cette bille 34 n'assure pas de manière analogue une fonction de guidage en l'absence de chocs axiaux.

En effet, les billes 34 du troisième système 32C de guidage anti-basculement ne coopèrent en fonctionnement ni avec aucune des faces 41 et 42 de la rainure 38 portée par l'organe 12 de support. Le système 32C de guidage anti-basculement sert pour limiter le basculement de la masselotte en cas de choc axial.

On comprendra que si les trois billes 34 des systèmes de guidage 32A, 32B et 32C devaient toutes participer au guidage se poserait alors un problème d'hyperstatisme, aussi la fonction principale de la bille 34 du troisième système 32C est-elle de former une butée propre à limiter le basculement axial de la masselotte 14, tel qu'indiqué précédemment en référence notamment à la figure 12.

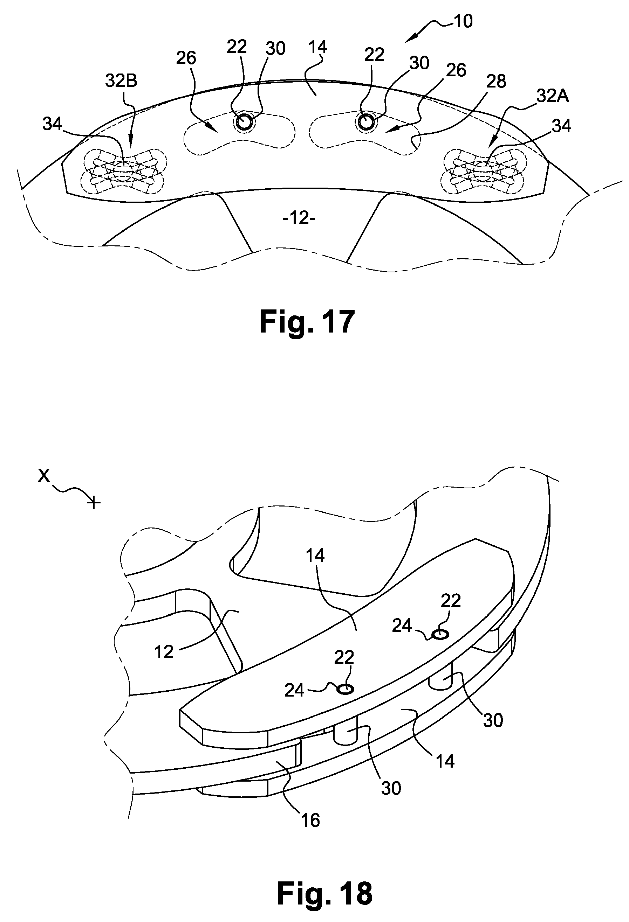

Les figures 16 et 17 représentent un quatrième mode de réalisation d'un dispositif 10 de filtration qui sera décrit ci-après par comparaison avec le premier mode de réalisation représenté aux figures 1 à 6.

Dans ce quatrième mode de réalisation, les systèmes 32 de guidage, associés à chacune des deux parties d'une masselotte 14 et pour chacune des masselottes 14 réparties circonférentiellement sur l'organe 12 de support du dispositif 10 de filtration, sont réalisés selon l'invention et les pistes 40, 42 obliques sont identiques à celles décrits précédemment, de même que sont identiques les moyens 22 de liaison des deux parties de la masselotte 14.

Avantageusement, les moyens 22 de liaison constituent des moyens de butée aptes à limiter les oscillations des deux parties de la masselotte 14 par rapport à l'organe 12 de support.

Les moyens 22 de liaison sont constitués par des entretoises et comportent avantageusement des moyens 30 d'absorption déformable élastiquement pour absorber les chocs et éviter les bruits qui seraient sinon produits lors du contact entre elles et l'organe 12 de support.

Par comparaison, les moyens 22 de liaison ne sont pas agencés à l'extrémité circonférentielle de chacune des deux parties de la masselotte 14.

Avantageusement, les moyens 22 de liaison sont agencés circonférentiellement entre le premier système 32A de guidage et le deuxième système 32B de guidage.

Grâce à un tel agencement, les moyens 22 de liaison sont plus proches du centre de gravité de chacune des masselottes 14 et le fonctionnement du dispositif 10 de filtration amélioré.

Les figures 18 à 20 représentent une variante de réalisation du quatrième mode de réalisation qui sera décrite ci-après par comparaison avec ledit quatrième mode de réalisation.

Dans le quatrième mode de réalisation, les orifices 26 étaient, du fait de la disposition des moyens 22 de liaison, fermés et réalisés dans la portion circonférentielle de l'organe 12 de support comprise radialement entre les fenêtres 20 et le bord externe 16.

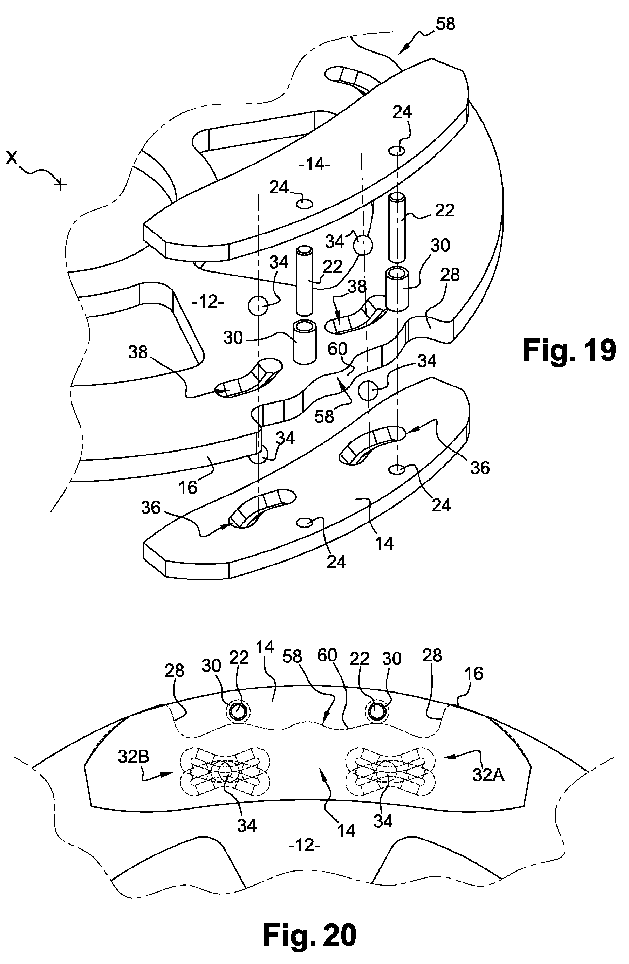

Avantageusement dans cette variante de réalisation, les moyens 22 de butée étant agencés centralement entre les systèmes 32A et 32B de guidage et décalés radialement vers l'extérieur, les orifices 26 sont remplacés par une unique encoche 58 réalisée directement dans le bord externe 16 de l'organe 12 de support, laquelle encoche 58 est plus particulièrement visible sur les figures 19 et 20.

L'encoche 58 est en forme de "U", ouverte radialement vers l'extérieur, et présente un profil 60 destiné à coopérer avec les entretoises 22 formant les moyens de liaison des deux parties de la masselotte 14 pour former au repos une butée radiale positionnant la masselotte 14.

Avantageusement, l'encoche 58 comporte circonférentiellement à chacune de ses extrémités une face radiale 28 formant une butée angulaire pour la masselotte 14 lorsque les entretoises 22 viennent en contact avec une face radiale 28 de l'encoche 58.

Les figures 21 à 23 représentent un dispositif 10 de filtration comportant, selon une deuxième conception, une paire d'organe de support, respectivement un premier organe 112 de support et un deuxième organe 112 de support entre lesquels est interposé axialement au moins une masselotte 114.

Par comparaison avec le dispositif 10 de filtration selon la première conception, dans le dispositif 10 de filtration selon cette deuxième conception c'est l'organe de support qui est dédoublé et ce faisant la masselotte qui est interposée entre les deux organes de support.

Pour reprendre la généralisation décrite précédemment, le premier élément du dispositif 10 de filtration est constitué par la masselotte qui est interposée axialement entre les organes 12 de support, lesquels constituent lesdits deux seconds éléments du dispositif 10 de filtration.

On décrira plus particulièrement ci-après le dispositif 10 de filtration selon cette deuxième conception par comparaison avec le premier mode de réalisation décrit en référence aux figures 1 à 6 et correspondant à un dispositif 10 de filtration suivant la première conception.

De préférence, le dispositif 10 de filtration comporte une série de n masselottes 114 réparties autour de l'axe X de rotation et interposées axialement entre lesdits premier organe 112 de support et deuxième organe 112 de support.

Chaque masselotte 114 est réalisée en une seule pièce, monobloc, et non en deux parties comme précédemment suivant la première conception.

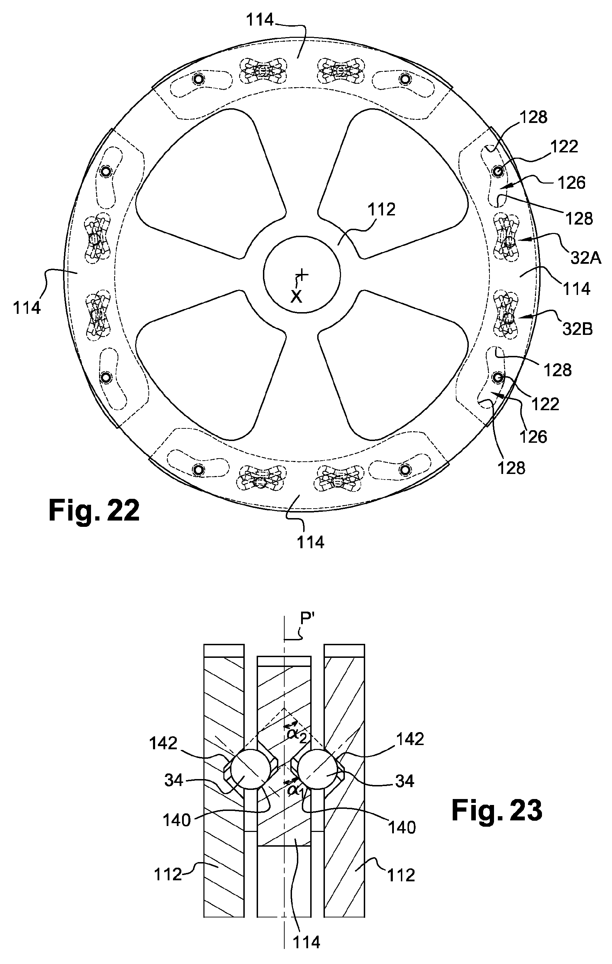

Dans l'exemple représenté sur les figures 21 et 22, le dispositif 10 de filtration comporte quatre masselottes 114 qui sont réparties circonférentiellement de manière régulière autour de l'axe X de rotation.

Comme précédemment, on décrira uniquement le dispositif 10 de filtration pour l'une des quatre masselottes 114, la description des systèmes 32 de guidage valant à l'identique pour les trois autres.

Avantageusement, le dispositif 10 de filtration présente une symétrie de conception par rapport à un plan P' radial médian de la masselotte 114 agencée axialement entre les organes 112 de support.

Le dispositif 10 de filtration comporte des moyens 122 de liaison qui relient axialement le premier organe 112 de support au deuxième organe 112 de support, à travers chaque masselotte 114.

Les moyens 122 de liaison des organes 112 de support sont constitués par des entretoises qui, analogues à celles décrites précédemment, s'étendent axialement à travers la masselotte 114 grâce à des fentes 126 ménagées dans la masselotte 114, chacune des extrémités des moyens de liaison étant reçues dans des trous 124 que comportent respectivement le premier organe 112 de support et le deuxième organe 112 de support.

Avantageusement, les fentes 126 comportent des faces 128 de butée destinées à coopérer avec le tronçon intermédiaire des entretoises 122 formant les moyens de liaison.

Avantageusement, des moyens 130 d'absorption sont prévus et sont de préférence portés par les entretoises, lesdits moyens 130 étant par exemple analogues à ceux décrits précédemment, notamment réalisés en matière élastique pour absorber les chocs et éviter les bruits.

Comme dans le premier mode de réalisation, deux systèmes de guidage 32A et 32B sont interposés entre la masselotte 114 et chacun des organes 112 de support agencés axialement de part et d'autre de la masselotte 114.

Le dispositif 10 de filtration est caractérisé par le fait que le système 32 de guidage comporte au moins deux éléments 34 de roulement appairés qui sont agencés axialement de part et d'autre de la masselotte 114, en opposition l'un par rapport à l'autre.

Chacun de ces deux éléments 34 de roulement est apte à coopérer avec une paire de pistes opposées, respectivement une première piste 140 de guidage portée par ladite masselotte 114 et une deuxième piste 142 de guidage portée par l'organe 112 de support se trouvant axialement en vis-à-vis.

Conformément à l'invention, lesdites première 140 et deuxième 142 pistes de guidage sont obliques, c'est-à-dire que lesdites pistes sont en section par un plan perpendiculaire au plan d'oscillation, inclinées par rapport au plan d'oscillation de manière à assurer tout particulièrement une reprise des efforts axiaux.

De préférence, les deux éléments 34 de roulement appairés de chaque système 32 de guidage sont respectivement constitués par une bille.

Tel que représenté sur la figure 23, les pistes 140, 142 de guidage inclinées sont avantageusement parallèles entre elles.

Chacune des pistes 140, 142 de guidage détermine un angle aigu avec le plan P' radial médian de la masselotte 114, respectivement un angle aigu (α₁) qui est de préférence égal à l'angle aigu (α₂) et d'une valeur de 45°.

Une telle valeur de 45° est particulièrement avantageuse pour obtenir une reprise équivalente des efforts radiaux et axiaux s'exerçant en fonctionnement sur le dispositif 10 de filtration.

## Revendications

1. Dispositif (10) de filtration, notamment pour une transmission de véhicule automobile, ayant un axe (X) de rotation et comportant :
- au moins un organe (12) de support apte à être entraîné en rotation autour de l'axe (X) de rotation,
- au moins une masselotte (14, 114), adjacente audit organe (12, 112) de support, par rapport auquel ladite masselotte (14, 114) est apte à osciller dans un plan d'oscillation orthogonal à l'axe (X) de rotation, et
- un système (32) de guidage de la masselotte (14, 114) par rapport à l'organe (12, 112) de support intervenant entre ledit au moins un organe (12) de support et ladite au moins une masselotte (14, 114),
où le système (32) de guidage comporte au moins deux éléments (34) de roulement, chaque élément (34) de roulement étant apte à coopérer avec une paire de pistes opposées, respectivement une première piste (40) de guidage portée par ladite au moins une masselotte (14, 114) et une deuxième piste (42) de guidage portée par ledit au moins un organe (12, 112) de support, **caractérisé en ce que** lesdites première et deuxième pistes de guidage étant agencées pour guider radialement et axialement le mouvement d'oscillation de la masselotte (14, 114) par rapport à l'organe (12, 112) de support.

2. Dispositif selon la revendication 1, **caractérisé en ce que** lesdites premières et deuxièmes pistes (40, 42) de guidage sont obliques par rapport au plan d'oscillation.

3. Dispositif selon la revendication 1 ou 2, **caractérisé en ce que** le dispositif (10) comporte au moins deux systèmes (32) de guidage, respectivement au moins un premier système (32A) de guidage et un deuxième système (32B) de guidage, qui sont interposés axialement entre ledit au moins un organe (12, 112) de support et ladite au moins une masselotte (14, 114).

4. Dispositif selon la revendication 3, comportant des moyens (22) de liaison déterminant un jeu axial maximal entre ledit au moins un organe (12, 112) de support et ladite au moins une masselotte (14, 114), **caractérisé en ce que** les moyens (22) de liaison sont agencés circonférentiellement entre lesdits premier système (32A) de guidage et deuxième système (32B) de guidage.

5. Dispositif selon l'une quelconque des revendications 1 à 3, **caractérisé en ce que** le dispositif (10) comporte trois systèmes (32) de guidage et **en ce que** les éléments (34) de roulement desdits systèmes de guidage sont agencés en triangle de manière à limiter le basculement de ladite au moins une masselotte (14, 114) par rapport audit organe (12, 112) de support.

6. Dispositif selon l'une quelconque des revendications 1 à 5, **caractérisé en ce que** au moins deux éléments (34) de roulement sont reliés mutuellement en déplacement pour former un équipage mobile grâce à quoi lesdits au moins deux éléments (34) de roulement se déplacent simultanément.

7. Dispositif selon la revendication 4, **caractérisé en ce que** les moyens (22) de liaison constituent des moyens de butée aptes à limiter les oscillations de ladite au moins une masselotte (14, 114) par rapport audit au moins un organe (12, 112) de support.

8. Dispositif selon la revendication 7, **caractérisé en ce que** le dispositif (10) comporte des moyens (30) d'absorption qui sont associés auxdits moyens de butée formés par les moyens (22) de liaison.

9. Dispositif selon l'une quelconque des revendications 1 à 8, **caractérisé en ce que** le dispositif (10) présente une symétrie de conception par rapport à un plan (P) radial médian de l'organe (12) de support orthogonal à l'axe (X) de rotation.

10. Dispositif selon l'une quelconque des revendications 1 à 8, **caractérisé en ce que** le dispositif (10) présente une symétrie de conception par rapport à un plan (P') radial médian de la masselotte (114).

## Patentansprüche

1. Filtrationsvorrichtung (10), insbesondere für ein Getriebe eines Automobilfahrzeugs, mit einer Drehachse (X) und umfassend:
- mindestens ein Stützglied (12), das geeignet ist, in Drehung um die Drehachse (X) mitgeführt zu werden,
- mindestens eine Ausgleichsmasse (14, 114), benachbart dem Stützglied (12, 112), in Bezug auf welches die Ausgleichsmasse (14, 114) geeignet ist, in einer Oszillationsebene orthogonal zur Drehachse (X) zu oszillieren, und
- ein Führungssystem (32) der Ausgleichsmasse (14, 114) in Bezug auf das Stützglied (12, 112), das zwischen dem mindestens einen Stützglied (12) und der mindestens einen Ausgleichsmasse (14, 114) wirksam ist,
wobei das Führungssystem (32) mindestens zwei Lagerelemente (34) umfasst, wobei jedes Lagerelement (34) geeignet ist, mit einem Paar gegenüberliegender Bahnen zusammenzuwirken, einer ersten Führungsbahn (40), die von der mindestens einen Ausgleichsmasse (14, 114) getragen wird, bzw. einer zweiten Führungsbahn (42), die von dem mindestens einen Stützglied (12, 112) getragen wird, **dadurch gekennzeichnet, dass** die erste und zweite Führungsbahn ausgelegt werden, radial und axial die Oszillationsbewegung der Ausgleichsmasse (14, 114) in Bezug auf das Stützglied (12, 112) zu führen.

2. Vorrichtung nach Anspruch 1, **dadurch gekennzeichnet, dass** die erste und die zweite Führungsbahn (40, 42) in Bezug auf die Oszillationsebene schräg sind.

3. Vorrichtung nach Anspruch 1 oder 2, **dadurch gekennzeichnet, dass** die Vorrichtung (10) mindestens zwei Führungssysteme (32) umfasst, mindestens ein erstes Führungssystem (32A) bzw. ein zweites Führungssystem (32B), die axial zwischen dem mindestens einen Stützglied (12, 112) und der mindestens einen Ausgleichsmasse (14, 114) angeordnet sind.

4. Vorrichtung nach Anspruch 3, umfassend Verbindungsmittel (22), die ein maximales axiales Spiel zwischen dem mindestens einen Stützglied (12, 112) und der mindestens einen Ausgleichsmasse (14, 114) bestimmen, **dadurch gekennzeichnet, dass** die Verbindungsmittel (22) in Umfangsrichtung zwischen dem ersten Führungssystem (32A) und dem zweiten Führungssystem (32B) angeordnet sind.

5. Vorrichtung nach einem der Ansprüche 1 bis 3, **dadurch gekennzeichnet, dass** die Vorrichtung (10) drei Führungssysteme (32) umfasst, und dass die Lagerelemente (34) der Führungssysteme dreieckig angeordnet sind, um ein Kippen der mindestens einen Ausgleichsmasse (14, 114) in Bezug auf das Stützglied (12, 112) einzuschränken.

6. Vorrichtung nach einem der Ansprüche 1 bis 5, **dadurch gekennzeichnet, dass** mindestens zwei Lagerelemente (34) miteinander verschieblich verbunden sind, um eine mobile Ausrüstung zu bilden, dank der sich die mindestens zwei Lagerelemente (34) gleichzeitig verschieben.

7. Vorrichtung nach Anspruch 4, **dadurch gekennzeichnet, dass** die Verbindungsmittel (22) Anschlagmittel darstellen, die geeignet sind, die Oszillationen der mindestens einen Ausgleichsmasse (14, 114) in Bezug auf das mindestens eine Stützglied (12, 112) einzuschränken.

8. Vorrichtung nach Anspruch 7, **dadurch gekennzeichnet, dass** die Vorrichtung (10) Absorptionsmittel (30) umfasst, welche den Anschlagmitteln zugeordnet sind, die von den Verbindungsmitteln (22) gebildet werden.

9. Vorrichtung nach einem der Ansprüche 1 bis 8, **dadurch gekennzeichnet, dass** die Vorrichtung (10) eine Konstruktionssymmetrie in Bezug auf eine radiale Medianebene (P) des Stützglieds (12) orthogonal zur Drehachse (X) aufweist.

10. Vorrichtung nach einem der Ansprüche 1 bis 8, **dadurch gekennzeichnet, dass** die Vorrichtung (10) eine Konstruktionssymmetrie in Bezug auf eine radiale Medianebene (P') der Ausgleichsmasse (114) aufweist.

## Claims

1. Filtration device (10), in particular for a motor vehicle transmission, having an axis (X) of rotation and comprising:
- at least one support member (12) able to be rotationally driven about the axis (X) of rotation,
- at least one flyweight (14, 114) adjacent to the said support member (12, 112), with respect to which the said flyweight (14, 114) is able to oscillate in an oscillation plane orthogonal to the axis (X) of rotation, and
- a guide system (32) for guiding the flyweight (14, 114) with respect to the support member (12, 112) that acts between the said at least one support member (12) and the said at least one flyweight (14, 114),
wherein the guide system (32) comprises at least two rolling elements (34), each rolling element (34) being able to cooperate with a pair of opposite tracks, respectively a first guide track (40) borne by the said at least one flyweight (14, 114) and a second guide track (42) borne by the said at least one support member (12, 112), **characterized in that** the said first and second guide tracks being arranged to radially and axially guide the oscillation movement of the flyweight (14, 114) with respect to the support member (12, 112).

2. Device according to Claim 1, **characterized in that** the said first and second guide tracks (40, 42) are oblique with respect to the oscillation plane.

3. Device according to Claim 1 or 2, **characterized in that** the device (10) comprises at least two guide systems (32), respectively at least a first guide system (32A) and a second guide system (32B) which are interposed axially between the said at least one support member (12, 112) and the said at least one flyweight (14, 114).

4. Device according to Claim 3, comprising connecting means (22) determining a maximum axial clearance between the said at least one support member (12, 112) and the said at least one flyweight (14, 114), **characterized in that** the connecting means (22) are arranged circumferentially between the said first guide system (32A) and second guide system (32B).

5. Device according to any one of Claims 1 to 3, **characterized in that** the device (10) comprises three guide systems (32) and **in that** the rolling elements (34) of the said guide systems are arranged in a triangle so as to limit the tilting movement of the said at least one flyweight (14, 114) with respect to the said support member (12, 112).

6. Device according to any one of Claims 1 to 5, **characterized in that** at least two rolling elements (34) are connected mutually in movement to form a moveable assembly whereby the said at least two rolling elements (34) move simultaneously.

7. Device according to Claim 4, **characterized in that** the connecting means (22) constitute stop means able to limit the oscillations of the said at least one flyweight (14, 114) with respect to the said at least one support member (12, 112).

8. Device according to Claim 7, **characterized in that** the device (10) comprises absorption means (30) which are associated with the said stop means formed by the connecting means (22).

9. Device according to any one of Claims 1 to 8, **characterized in that** the device (10) has a symmetry of design with respect to a median radial plane (P) of the support member (12) orthogonal to the axis (X) of rotation.

10. Device according to any one of Claims 1 to 8, **characterized in that** the device (10) has a symmetry of design with respect to a median radial plane (P') of the flyweight (114).
